# EUROPEAN PATENT SPECIFICATION

(11) **EP 2 625 034 B1**
(45) Date of publication and mention of the grant of the patent: **16.07.2014**
(21) Application number: 11754528.5
(22) Date of filing: 30.06.2011
(51) Int. Cl.: B32B 15/06, B32B 15/08, B32B 15/10, B66F 9/12

(54) **AN ANTI-SCRATCH AND ANTI-SLIP DEVICE FOR LIFTING LOADS, PREFERABLY THROUGH THE USE OF A LIFT FORK**
KRATZSICHERE UND RUTSCHSICHERE VORRICHTUNG ZUM HEBEN VON LASTEN, IM BESONDEREN ANHAND EINES GABELSTAPLERS
DISPOSITIF ANTI-RAYURES ET ANTIDÉRAPANT POUR SOULEVER DES CHARGES, DE PRÉFÉRENCE À L'AIDE D'UN LÈVE-PALETTE

(30) Priority: 07.10.2010 IT PI20100109
(43) Date of publication of application: 14.08.2013
(73) Proprietor: Giannetti, Mirco, 47843 Misano Adriatico (RN) (IT)
(72) Inventor: Giannetti, Mirco, 47843 Misano Adriatico (RN) (IT)
(74) Representative: Emmi, Mario
(86) International application number: PCT/IT2011/000222
(87) International publication number: WO 2012/046259

(56) References cited:
- DE-U1-202005 009 034

## Description

### Technical field

The present invention refers to the technical field of the machines used for the support and/or lift of loads, such as the fork lift trucks.

In particular, the invention refers to an innovative anti-scratch and anti-slip device, magnetically applicable and therefore in a removable manner, to load lifting surfaces, preferably the forks of a lift, thus impeding the formation of scratches on the moved material and, at the same time, limiting drastically the risk of slipping thereof outside the load plane.

### Background art

Machines for lifting and supporting loads, such as lift trucks or lift forks, have long been known.

For example, in the particular case of lift forks, these are provided with forks, generally vertically mobile in such a way as to be able to lower and lift them at will. In such a manner, it is possible to lower the forks to ground level so as to drive them under the load to then proceed to the lifting and transport of the load to the pre-chosen place. In other cases, the forks are not only provided with a vertical motion, but they are also provided with a horizontal motion that allows a reciprocal getting close and move apart between them, in such a way as to be able to grasp laterally the objects, adapting itself to their different shapes and dimensions.

A technical problem that is particularly important concerns the need for protecting from scratches the transported object and, at the same time, the risk of slipping thereof from the forks. It is in fact known that the direct contact with the metal, material of which the forks are made, determines a rather low coefficient of friction, mainly in the case of lifting of loads which are in turn made of metals. Moreover, the direct contact metal-metal causes scratches, wear and contaminations, therefore damaging the load, at least aesthetically.

In the background art, in order to solve said problem, hand-made solutions are put into practice, which include the occasional application of a covering o cardboard around the fork, fixed through Scotch tape. This solution, apart from requiring some time for the application and therefore resulting uncomfortable, is also very poor. Indeed, the cardboard does not have particular mechanical characteristics of resistance, and the same goes for the Scotch tape. Under the action of rather heavy loads (which can easily go over the hundreds of kilos), the cardboard wears quickly, causing a direct contact between forks and load, while at the same the tape peels off unexpectedly, precluding the seal of the cardboard to the forks and therefore causing the easy slipping of the lifted object.

The problem is also identical in the case of loads that are arranged on fixed loading platforms.

The document DE 20 2005 009034**,** which is the preamble of the claim 1, discloses an improved solution.

This document teaches a device for protecting the fork of a forklift comprising a protective sheet (for example made of plastic, wood or metal) and a magnet.

The magnet allows an easy application of the device on the fork and the protective sheet allows to protect the load. However the use of plastic, wood or metal suggested in the document is not efficient for protecting adequately the load, avoiding the slipping or scratches of the load to be lifted.

### Disclosure of invention

It is therefore the aim of the present invention to provide a device 1 which results easily applicable to a load support surface, in particular a lifting surface of the load or a fork 10 of a lift, and that solves at least in part said drawbacks.

In particular, it is the aim of the present invention to provide a device 1 that results quickly and easily applicable to the surface 10 and that, at the same time, guarantees both a good seal on the lifted object and a good anti-scratch protective action.

These and other aims are therefore reached with the present device 1 for a metallic fork of a lift, as per claim 1.

The device (1) comprises:
- A first magnetic layer (2) so that the device (1) results magnetically applicable to the fork (10) of the lift.

In accordance with the invention, a second rubber layer (4) is arranged on the first layer (2), so that the rubber, when a load is lifted with the fork, touches directly the load without scratching it, limiting the slipping thereof and;
- A third layer (3) is further interposed between the first (2) and the second layer (4) so as to stiffen the device (1) as a whole, limiting the inflexions thereof.

Such a device, generally in the shape of a strip, results easily applicable to any fork or surface in general of a lift, thus realizing a protective layer that, on the one hand, impedes the slipping of the load and, on the other hand, protects the load from scratches due to the direct contact with the metal of the fork.

The use of a magnetic strip thus made is therefore reliable and, at the same time, results of easy and quick application and removal.

Advantageously, the intermediate layer (3) can be of metal, for example iron or steel.

Although other metals can be used (also non ferrous ones), such examples allow to obtain good rigidity maintaining at the same time relatively thin thicknesses.

For example, advantageously, the intermediate layer (3) can be comprised within a range of thickness that goes from 1 mm to 4 mm, and is preferably of 2 mm.

Advantageously, the magnetic layer can have a thickness comprised within a range from 1 mm to 3 mm, and preferably of 2 mm.

These thicknesses allow to obtain good magnetic forces and at the same time maintain relatively thin the overall thickness of the strip.

To that aim, advantageously, the magnetic layer (2) is configured in such a way as to exert a magnetic force of at least 700N, and preferably within a range from 700N and 1500N.

Advantageously, the second layer in rubber (4) presents a plurality of beads or bubbles (102) for improving the anti-slip seal of the overlying load.

Advantageously, such a device is strip-shaped so as to substantially trace the shape of the fork on which it is applicable.

Advantageously, in all the configurations, an L-shaped folding (7) can be included on both sides of the strip.

This folding not only contributes to a better seal of the strip itself on the fork but also, above all, protects the concave or convex-shaped loads from direct contact with the corners of the fork.

Advantageously, in a particular configuration of the invention, a press (6) can be further provided, said press being arranged on the device (1) in such a way as to allow to grasp laterally the load when the device is applied to the fork.

In this case, the device (1) is L-shaped and comprises an apex (7') to which the press results connected (6).

Advantageously, a tang (5) can be included for simplifying the detachment of the device from the fork (10) to which it results applicable.

Advantageously, in an alternative solution, the terminal end (101) of the device can lack the intermediate metallic layer.

Advantageously, a weight sensor (20) is further included, integrated to the device (1) in such a way that the lifted object results contextually weighable.

Moreover, it is also described here a mobile surface (10) of a lift, preferably a fork, for operating the lifting of a load and characterized in that it comprises a device (1) as described.

Advantageously, it is also described here a method for operating the lifting of a load through a fork (10) of a lift in such a way as to impede slipping and damaging, in particular scratches of the moved load.

The method comprises the application of at least one strip (1) on the surface of the fork with which to operate the lifting of the load, the strip comprising a first magnetic layer (2) in such a way as to result magnetically applicable in a removable manner to the fork (10), a second rubber layer (4), arranged on the first layer (2), in such a way that said rubber, when the load is lifted with said fork, touches directly the load without scratching it, limiting the slipping thereof, and an intermediate metallic layer (3), interposed between the first (2) and the second layer (4) in such a way as to stiffen the strip (1) as a whole, limiting the inflexions thereof.

Last, it is also described here the use of a device (1) as described, which includes its application to the surface of a lift, for example a fork (10) of a lift, for protecting and impeding the slipping of a moved load with said surface of the lift.

### Brief description of drawings

Further characteristics and advantages of the device, according to the invention, will result clearer with the description that follows of one of its embodiments, made to illustrate but not to limit, with reference to the annexed drawings, wherein:
- Figure 1 represents an exploded axonometric view of the present device wherein the three layers (2, 3, 4) are represented separated among them;
- Figure 2 shows an axonometric view of the device 1;
- Figure 3 shows one of its applications to the fork of a lift;
- Figure 4 shows the device applied to the fork;
- Figure 5 shows a weight sensor applied to the device 1 in all its possible embodiments;
- Figure 6 and figure 7 show a second configuration of the invention;
- Figures from 8 to 10 show a second variant of the invention;
- Figures from 11 to 13 show a further variant of the invention.

### Description of one preferred embodiment

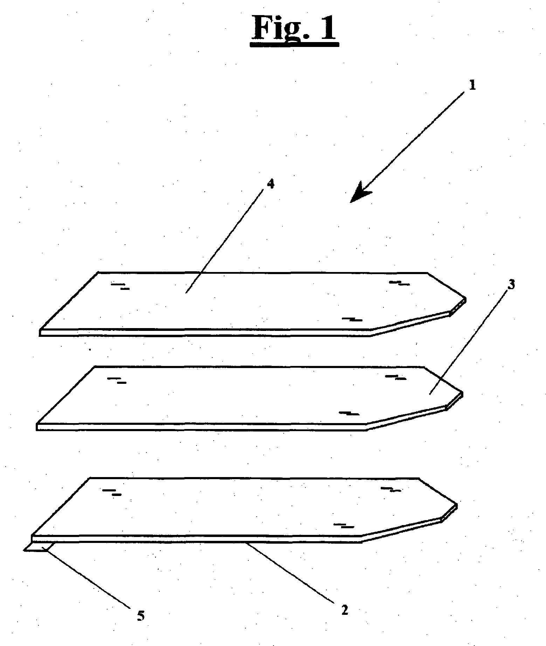

With reference to figure 1 it is described, in a first configuration of the invention, a protective and anti-slip device 1 for lifting loads through lifting forks, for example the forks of a lift.

In particular, figure 1 explodes the three parts (2, 3, 4), overlapped among them, which compose the device 1 in question.

In particular, a first layer 2, or inferior layer 2, is included, realized entirely or just in part in magnetic material in such a way that, thanks to the action of magnetic attraction that is generated, adheres to the metal of the fork on which it is applied.

Such layer can, for example, be obtained with a mixture of ferrite and rubber.

A second layer 4, or superior layer 4, is arranged on the first layer 2 and is used in direct contact with the load in such a way as not to damage it (for example, by scratching it) and above all, realizing a good friction coefficient that impedes the slipping thereof.

To that aim, rubber materials are particularly suitable. Rubber is in fact particularly suitable for that function since it is soft and at the same time has a high friction coefficient. In such a manner, the lifted load, leaning directly on the rubber, is not scratched and is submitted to a good friction coefficient that impedes the slipping thereof.

Among the various examples of rubber materials, we can mention nitrile rubber, which permits the contact even with food substances. Other rubbers can be styrene rubber, which has an exercise temperature up to 70°C and is suitable for industrial plates. We can also mention polybutadiene rubber with anti-abrasive properties, or ethylene-propylene rubber, resistant to atmospheric and chemical agents, fluorinated rubber, resistant to flames, and SBR rubber (Styrene Butadiene Rubber).

Although rubber is the preferred material for the present aims, other materials with similar characteristics can anyway be used and without for this moving apart from the present inventive concept.

For example, wood has both such a good friction coefficient and superficial softness as not to scratch the metal. Multi-layer wood or chestnut oak can therefore be used.

Last, plastic materials can also be used.

A third layer 3, or intermediate layer 3, is instead interposed between the inferior layer 2 and the superior layer 4 in such a way as to give enough rigidity to the entire device 1, thus avoiding undesired inflexions due to the action of the overlying load and that can cause a non-regular adherence.

To that aim, it is preferably realized in metal, for example iron, and with thicknesses that vary from 1mm to 4mm, and preferably of 2 mm. Naturally, such range has been indicated as the preferred one, particularly in the case of the use of iron, but can vary on the basis of the use of other metals or alloys. For example, the use of an intermediate layer of steel, though more expensive, can allow to lower significantly the thickness values indicated above.

Other materials, however of enough rigidity, can comprise also a high-resistance rigid plastic layer.

The presence of the intermediate layer 3 is particularly important and relevant, above all in the case of heavy loads. In fact, the inflexion if the device 1, and therefore the inflexion of the magnetic layer 2, causes, in addition to a partial detachment due to said inflexion exclusively, a change of polarity with a consequent variation of the magnetic field generated. As a consequence, the force F of magnetic adhesion of the device to the forks is also altered, which diminishes drastically. In this case, it is therefore necessary to maintain unaltered the geometry of the magnetic layer as much as possible in order to avoid unexpected seal settlement. To that aim, the intermediate layer 3 guarantees a good overall rigidity that limits the inflexion of the device.

Moreover, the overlying metallic layer directs the entire magnetic field downwards, making that said field has greater adherence on the fork to which it results applied.

The presence of the magnet, above all, makes that such strips result easily applicable in any point of the lift fork in such a way as to be drawn and applied to the forks every time it becomes necessary and removable at the end of use.

The magnet must be dimensioned in such a way as to exert enough force as to avoid the detachment of the strip in its operative phase. In this case, magnets can be selected capable of exerting forces at least equal or superior to the 700N, and preferably, in a range between 700N and 1500N.

Such a range allows an adequate seal, optimizing at the same time the dimensions of the magnet itself.

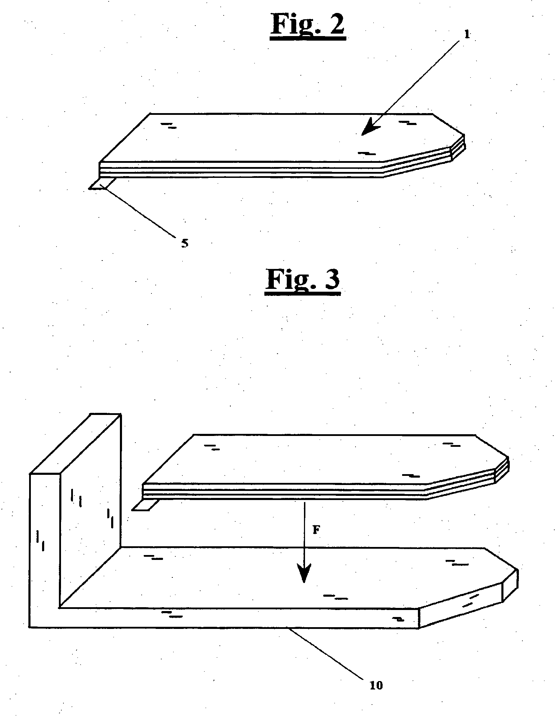

Figure 2 shows the device 1 assembled wherein the three layers have been overlapped and connected between them according to the sequence of figure 1. A cohesive material that can be used for coupling the layers can be, for example, a common seal glue.

Figure 2 highlights an appendix or tang 5 which serves to facilitate the detachment of the device 1 from the fork. Through such an appendix the user can therefore grasp the device and lift it progressively, causing the detachment of it from the fork.

Although figure 2 highlights a solution wherein the tang 5 is applied to the first magnetic layer 2, it is anyway clear that the same can be connected to any of the layers described.

Preferably, but not necessarily, the layers are cut out in the shape of strips that substantially trace the shape of the fork in such a way that their application on the same results uniform.

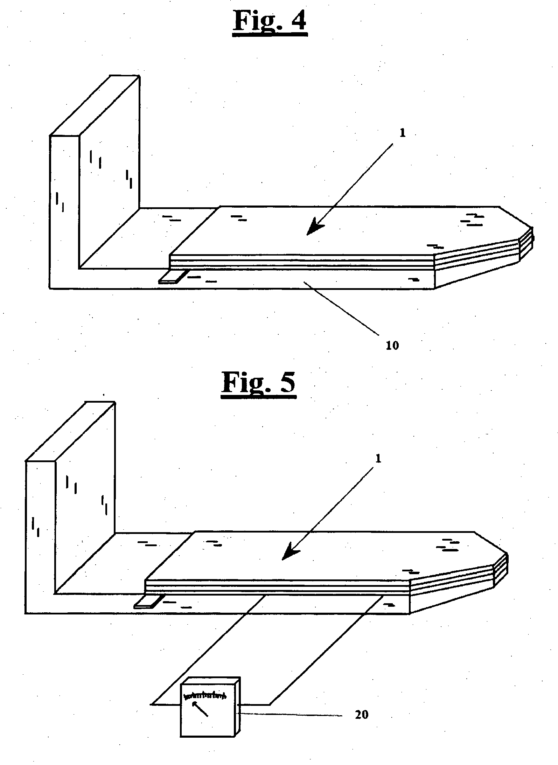

Figure 3, in an example of use, shows the application of the device 1 on a fork 10 through the magnetic attraction force **F** that is established between the metal of the fork itself and the magnet that constitutes the layer 2. Figure 4 shows the device applied to the fork and therefore ready for use.

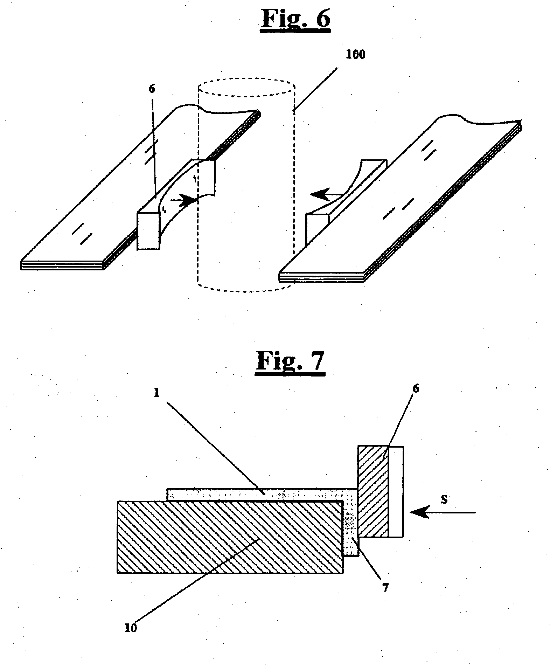

Figure 6 illustrates a second configuration of the invention which is identical to the first one but to which a press 6 is added. The press can have different geometrical forms, such as semi-circumferential (that is C-shaped) or V-shaped. As shown in figure 6, such a constructive solution is particularly functional in the case of forks that move also between them reciprocally since they move apart and come close. The use of a press adequately shaped thus allows to grasp laterally objects of particular shapes.

Accordingly, figure 6 shows the lateral grasping of a cylinder 100 with a thin dotted line. Other objects of particular shapes can also be grasped with presses of the same shape.

The grasping surface of the press can be covered with an anti-scratch material, such as rubber.

In order to optimize the functioning, the section of figure 7 shows that, in the case of use of the presses connected rigidly to the device 1, the realization of the device 1 itself is preferred in the shape of an L. In this manner, the thrust S acting on the device 1, due to the grasping action between the forks, will not be able to cause the slipping of the device with respect to the surface on which it is applied, since the appendix 7 of the L realizes a contrast against the surface of the fork itself. In this manner, it will be possible to avoid an overdimensioning of the magnetic layer 2.

The rigid connection of the press to the device 1 can be realized in different ways, for example including one or more L-shaped brackets, welded on one side to the press and on the other side to the metallic intermediate layer.

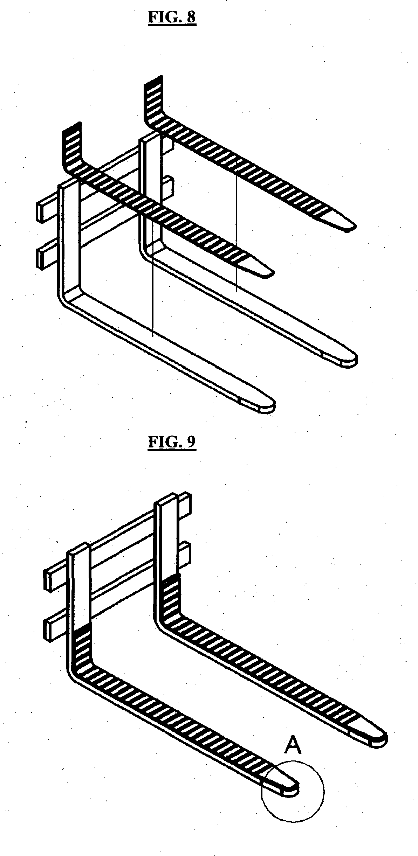

Figure 8 shows a further configuration of the invention, identical to the preceding one, except for the fact that instead of the tang 5 there is a strip with its final end 101 lacking the metallic intermediate layer.

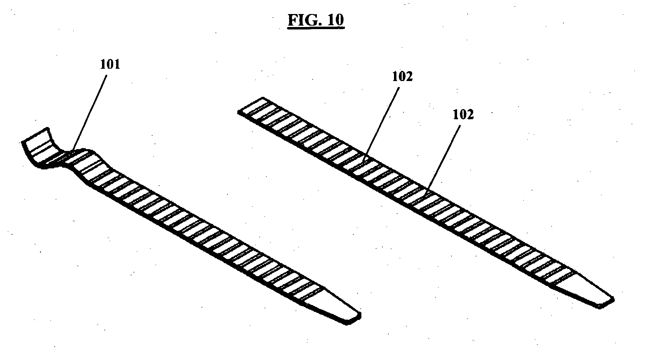

This makes that, as shown in figures 8, 9 and in better detail in figure 10, such a terminal part 101 results flexible in such a way as to be grasped manually and detached on the part of fork to which it results applied. Moreover, such a portion can easily follow the L-shaped curved profile of the fork on which it is applied. (See figures 8 and 9, for example).

In all the configurations described, and in particular way for the configuration of figures from 8 to 10, rises 102 in the rubber of the superior layer o of the bubbles are highlighted. These guarantee a better anti-slip seal of the overlying load.

In all the configurations of the invention, both the superior layer in rubber and the magnetic inferior one can be realized with a vulcanization process, arranging the rubber on the metal of the intermediate layer placed in turn in a mold. Alternatively, the injection of the rubbers on the metal can be possible, always placed within a mold.

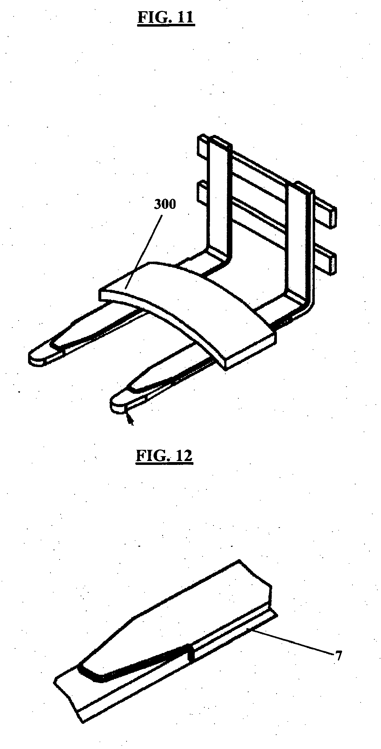

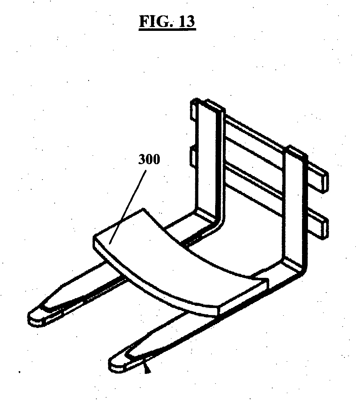

Figures from 11 to 13 show a further variant of the invention wherein the strip includes an L-shaped folding 7 on both sides, identical to the one of figure 6. In this case, such a folding 7 not only further limits the lateral movements of the strip but also, and above all, as shown in figure 11 and 13, protects the load from the direct contact against the angles of the fork in the case of load 300, concave or convex.

In all the configurations described, as shown in figure 5, it is also possible to provide the device 1 with a weight sensor 20, which are commonly known on the market.

The weight sensor is therefore capable of measuring the weight of the object arranged on the device 1, thus eliminating the further inconvenience of having to first weigh the object in a weighing station and only then lift it by means of the forks of the lift.

Although the invention is preferably addressed to an application on metallic forks of a lift, it is anyway clear that the same can be applied in the same way to any lifting surface, such as a loading platform, movable vertically and/or laterally, or fixed support surfaces such as the deck of a truck or a metallic container. A further applicative example can comprise also the application of such strips to the vices of a lift fork for the movement of the paper reels. Such vices open, close and rotate in order to be able to grasp and manage the paper reels in the industry of paper transformation.

The lengths of the strips are generally such as to occupy the entire length of the fork and therefore, can vary within a range from 1 m to 2 m and more.

Nevertheless, the application of shorter strips or the application in succession of short strips along the fork is possible.

## Claims

1. A device (1) for the metallic fork (10) of a forklift truck and comprising:
- A first magnetic layer (2), so that the device (1) results magnetically applicable to the fork (10) of the lift;
- **Characterized by** the fact that a second rubber layer (4) is arranged on the first layer (2), in such a way that said rubber, when a load is lifted with said fork, touches directly the load without scratching it, limiting the slipping thereof and;
- An intermediate layer (3) being interposed between the first (2) and the second layers (4) in such a way as to stiffen the device (1) as a whole, limiting the inflexions thereof.

2. A device (1), according to claim 1, wherein the intermediate layer (3) is of metal, preferably iron or steel.

3. A device (1), according to claim 1 or 2, wherein the intermediate layer (3) is comprised within a range of thickness that goes from 1 mm to 4 mm, and is preferably of 2 mm.

4. A device (1), according to claim 1, wherein the magnetic layer has a thickness comprised within a range from 1 mm to 3 mm, and is preferably of 2 mm.

5. A device (1), according to claim 1 or 4, wherein the magnetic layer (2) is configured in such a way as to exert a magnetic force of at least 700N, and preferably within a range from 700N and 1500N.

6. A device (1), according to claim 1, wherein the second rubber layer (4) presents a plurality of beads or bubbles (102) for improving the anti-slip seal.

7. A device (1), according to one or more of the preceding claims, **characterized in that** it is strip-shaped so as to substantially trace the shape of the fork on which it is applicable and wherein, further, an L folding (7) is included on both sides of the strip.

8. A device (1), according to one or more of the preceding claims, wherein a press (6) is further included, said press being arranged on the device (1) in such a way as to allow to grasp laterally the load when the device is applied to the fork.

9. A device (1), according to claim 8, wherein the device (1) is **L**-shaped and comprises an apex (7') to which the press (6) results connected.

10. A device (1), according to one or more of the preceding claims from 1 to 9, wherein a tang (5) is included for simplifying the detachment of the device from the fork (10) to which it results applicable.

11. A device (1), according to one or more of the preceding claims from 1 to 10, wherein the terminal end (101) of the device lacks the intermediate metallic layer.

12. A device (1), according to one or more of the preceding claims, wherein a weight sensor (20) is further included, integrated to the device (1) in such a way that the lifted object results contextually weighable.

13. A mobile surface (10) of a lift, preferably a fork (10), for operating the lifting of a load, **characterized in that** it comprises a device (1), as per one or more of the preceding claims from 1 to 12.

14. A method for operating the lifting of a load through a fork (10) of a forklift truck and comprising the application of at least one strip (1) on the surface of the fork with which to operate the lifting of the load, the strip comprising a first magnetic layer (2) in such a way as to result magnetically applicable in a removable manner to the fork (10), a second rubber layer (4), arranged on the first layer (2), in such a way that said rubber, when the load is lifted with said fork, touches directly the load without scratching it, limiting the slipping thereof, and an intermediate layer (3), interposed between the first (2) and the second layer (4) in such a way as to stiffen the strip (1) as a whole, limiting the inflexions thereof.

15. The use of a device (1), as per claim 1, which includes its application to the fork (10) of a lift for protecting and impeding the slipping of a lifted load with said fork.

## Patentansprüche

1. Vorrichtung (1) für die metallische Gabel (10) eines Gabelstaplers, umfassend:
- Eine erste magnetische Schicht (2), sodass die Vorrichtung (1) magnetisch an der Gabel (10) der Hubeinheit anbringbar ist;
- **Dadurch gekennzeichnet, dass** eine zweite Gummischicht (4) auf der ersten Schicht (2) angeordnet ist, dergestalt, dass der Gummi beim Anheben einer Last mit der Gabel die Last direkt berührt ohne sie zu zerkratzen und das Abrutschen davon einschränkt;
- Eine metallische Zwischenschicht (3) zwischen der ersten (2) und der zweiten Schicht (4) dergestalt eingefügt, um die Vorrichtung (1) als Ganzes zu versteifen und deren Durchbiegung einzuschränken.

2. Vorrichtung (1) nach Anspruch 1, wobei die Zwischenschicht (3) aus Metall besteht, vorzugsweise Eisen oder Stahl.

3. Vorrichtung (1) nach Anspruch 1 oder 2, wobei die Zwischenschicht (3) in einem Dickenbereich liegt, der von 1 mm bis 4 mm reicht, und vorzugsweise 2 mm beträgt.

4. Vorrichtung (1) nach Anspruch 1, wobei die magnetische Schicht eine Dicke aufweist, die in einem Bereich von 1 mm bis 3 mm liegt und vorzugsweise 2 mm beträgt.

5. Vorrichtung (1) nach Anspruch 1 oder 4, wobei die magnetische Schicht (2) dergestalt konfiguriert ist, um eine magnetische Kraft von mindestens 700 N und vorzugsweise in einem Bereich von 700 N und 1500 N auszuüben.

6. Vorrichtung (1) nach Anspruch 1, wobei die zweite Gummischicht (4) eine Vielzahl von Perlen oder Blasen (102) zur Verbesserung der Anti-Rutsch-Versiegelung aufweist.

7. Vorrichtung (1) nach einem oder mehreren der vorhergehenden Ansprüche, **dadurch gekennzeichnet, dass** sie streifenförmig ist, um so im Wesentlichen der Form der Gabel zu folgen, auf der sie anbringbar ist, und wobei ferner auf beiden Seiten des Streifens eine L-Falzung (7) eingeschlossen ist.

8. Vorrichtung (1) nach einem oder mehreren der vorhergehenden Ansprüche, wobei ferner eine Presse (6) eingeschlossen ist und die Presse so auf der Vorrichtung (1) angeordnet ist, dass sie es erlaubt, die Last seitlich aufzunehmen, wenn die Vorrichtung auf der Gabel angebracht ist.

9. Vorrichtung (1) nach Anspruch 8, wobei die Vorrichtung (1) **L**-förmig ist und einen Scheitel (7') umfasst, mit dem die Presse (6) verbunden ist.

10. Vorrichtung (1) nach einem oder mehreren der vorhergehenden Ansprüche 1 bis 9, wobei eine Lasche (5) eingeschlossen ist, um das Ablösen der Vorrichtung von der Gabel (10) zu erleichtern, auf der sie angebracht ist.

11. Vorrichtung (1) nach einem oder mehreren der vorhergehenden Ansprüche 1 bis 10, wobei dem Abschlussende (101) der Vorrichtung die metallische Zwischenschicht fehlt.

12. Vorrichtung (1) nach einem oder mehreren der vorhergehenden Ansprüche, wobei ferner ein Gewichtssensor (20) eingeschlossen ist, dergestalt in die Vorrichtung (1) integriert, dass das angehobene Objekt kontextabhängig wägbar ist.

13. Mobile Oberfläche (10) einer Hubeinheit, vorzugsweise eine Gabel (10), zum Betreiben des Hebens einer Last, **dadurch gekennzeichnet, dass** sie eine Vorrichtung (1) nach einem oder mehreren der vorhergehenden Ansprüche von 1 bis 12 umfasst.

14. Verfahren zum Betreiben des Hebens einer Last mittels einer Gabel (10) einer Hubeinheit, umfassend das Anbringen von mindestens einem Streifen (1) auf der Oberfläche der Gabel, mit der das Heben der Last betrieben wird, wobei der Streifen eine erste magnetische Schicht (2) dergestalt umfasst, dass er in abnehmbarer Weise an der Gabel (10) magnetisch anbringbar ist, eine zweite Gummischicht (4) auf der ersten Schicht (2) dergestalt angeordnet, dass der Gummi beim Anheben der Last mit der Gabel die Last direkt berührt ohne sie zu zerkratzen und das Abrutschen davon einschränkt, und eine metallische Zwischenschicht (3) zwischen der ersten (2) und der zweiten Schicht (4) dergestalt eingefügt, um die Vorrichtung (1) als Ganzes zu versteifen und deren Durchbiegung einzuschränken.

15. Verwendung einer Vorrichtung (1) nach Anspruch 1, was deren Anbringen auf der Gabel (10) einer Hubeinheit zum Schutz und Verhindern des Verrutschens einer angehobenen Last mit der Gabel einschließt.

## Revendications

1. Dispositif (1) pour la fourche métallique (10) d'un chariot élévateur à fourche et comprenant :
- une première couche magnétique (2), de sorte que le dispositif (1) puisse être appliqué de façon magnétique sur la fourche (10) de l'élévateur ;
- **caractérisé en ce qu'**une deuxième couche en caoutchouc (4) est disposée sur la première couche (2), de sorte que ledit caoutchouc, lorsqu'une charge est soulevée par ladite fourche, touche directement la charge sans la rayer, ce qui limite le glissement de celle-ci et ;
- une couche intermédiaire (3) interposée entre la première (2) et la deuxième couches (4), de façon à rigidifier le dispositif (1) dans son ensemble, ce qui limite les flexions de celui-ci.

2. Dispositif (1), selon la revendication 1, dans lequel la couche intermédiaire (3) est en métal, de préférence du fer ou de l'acier.

3. Dispositif (1), selon la revendication 1 ou 2, dans lequel la couche intermédiaire (3) a une épaisseur allant de 1 mm à 4 mm, et est de préférence de 2 mm.

4. Dispositif (1), selon la revendication 1, dans lequel la couche magnétique a une épaisseur allant de 1 mm à 3 mm, et est de préférence de 2 mm.

5. Dispositif (1), selon la revendication 1 ou 4, dans lequel la couche magnétique (2) est agencée de façon à exercer une force magnétique d'au moins 700 N, et de préférence entre 700 N et 1500 N.

6. Dispositif (1), selon la revendication 1, dans lequel la deuxième couche en caoutchouc (4) présente une pluralité de billes ou de bulles (102) destinées à améliorer l'antidérapance.

7. Dispositif (1), selon une ou plusieurs des revendications précédentes, **caractérisé en ce qu'**il est en forme de bande, de façon à suivre sensiblement la forme de la fourche sur laquelle il s'applique et dans lequel, en outre, un repli en L (7) est prévu sur les deux côtés de la bande.

8. Dispositif (1), selon une ou plusieurs des revendications précédentes, dans lequel une presse (6) est en outre prévue, ladite presse étant agencée sur le dispositif (1) de façon à permettre de saisir la charge latéralement lorsque le dispositif est appliqué sur la fourche.

9. Dispositif (1), selon la revendication 8, dans lequel le dispositif (1) est en forme de **L** et comprend un sommet (7') sur lequel la presse (6) est reliée.

10. Dispositif (1), selon une ou plusieurs des revendications précédentes 1 à 9, dans lequel une pince (5) est prévue afin de simplifier le détachement du dispositif de la fourche (10) sur laquelle il s'applique.

11. Dispositif (1), selon une ou plusieurs des revendications précédentes 1 à 10, dans lequel l'extrémité terminale (101) du dispositif ne comporte pas la couche intermédiaire métallique.

12. Dispositif (1), selon une ou plusieurs des revendications précédentes, dans lequel un capteur de poids (20) est en outre prévu, intégré au dispositif (1) de sorte que l'objet soulevé puisse être pesé dans son contexte.

13. Surface mobile (10) d'un élévateur, de préférence une fourche (10), destinée à soulever une charge, **caractérisée en ce qu'**elle comprend un dispositif (1), selon une ou plusieurs des revendications précédentes 1 à 12.

14. Procédé pour le levage d'une charge avec une fourche (10) d'un chariot élévateur à fourche et comprenant l'application d'au moins une bande (1) à la surface de la fourche avec laquelle la charge sera levée, la bande comprenant une première couche magnétique (2) de façon à pouvoir être appliquée de manière magnétique sur la fourche (10) et être amovible, une deuxième couche en caoutchouc (4), disposée sur la première couche (2), de façon à ce que ledit caoutchouc, lorsque la charge est soulevée avec ladite fourche, touche directement la charge sans la rayer, ce qui limite le glissement de celle-ci, et une couche intermédiaire (3) interposée entre la première (2) et la deuxième couches (4), de façon à rigidifier la bande (1) dans son ensemble, ce qui limite les flexions de celle-ci.

15. Utilisation du dispositif (1), selon la revendication 1, qui comprend son application sur la fourche (10) d'un élévateur afin de protéger et empêcher le glissement d'une charge soulevée par ladite fourche.
